# EUROPÄISCHE PATENTANMELDUNG

(11) **EP 1 008 750 A1**
(43) Veröffentlichungstag der Anmeldung: **14.06.2000**
(21) Anmeldenummer: 99123064.0
(22) Anmeldetag: 20.11.1999
(51) Int. Cl.: F04B 23/02

(54) **Hydraulisches Kompaktaggregat**

(30) Priorität: 07.12.1998 DE 19856348; 22.06.1999 DE 19928515
(71) Anmelder: ROBERT BOSCH GMBH, 70442 Stuttgart (DE)
(72) Erfinder: Dworak, Wilhelm, 70437 Stuttgart (DE); Nedorost, Rudolf, 71665 Vaihingen/Enz (DE)

(57) **Zusammenfassung**

Es wird ein hydraulisches Kompaktaggregat (10) vorgeschlagen, das sich insbesondere durch eine kurze Baulänge und seine preisgünstige Bauweise auszeichnet. Hierzu weist das Kompaktaggregat (10) einen speziell ausgeführten Vorratsbehälter (18) auf, der die Antriebseinrichtung (12) rahmenförmig umschließt. Der Vorratsbehälter (18) ist stirnseitig von einem Deckelteil (50) verschlossen und ist von außen leicht zugänglich. Als Antriebseinrichtung (12) lassen sich beispielsweise Elektromotoren ohne eigenes Motorgehäuse einsetzen. Dies spart neben Bauraum und Kosten auch Gewicht ein.

## Beschreibung

### Stand der Technik

Die Erfindung geht aus von einem hydraulischen Kompaktaggregat entsprechend der Gattung des Anspruchs 1. Kompaktaggregate werden zur Versorgung hydraulischer Verbraucher eingesetzt, die insbesondere in Fahrzeugen oder in fahrbaren Transport- bzw. Hebeeinrichtungen eingebaut sind. Ziel bei der Entwicklung neuer Kompaktaggregate ist es u.a. Kosten, Bauraum, Gewicht und Wartungsaufwand zu reduzieren.

Hydraulische Kompaktaggregate sind beispielsweise aus der Druckschrift 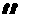 Hydraulik in Theorie und Praxis", Robert Bosch GmbH Erbach, Ausgabe DE 8/96, Seite 163 bereits bekannt. Sie bestehen aus einer Antriebseinrichtung, einer damit gekoppelten Pumpe, einem Vorratsbehälter und einem Ventilblock, in dem die hydraulischen Anschlüsse und die Steuerglieder angeordnet sind. Die Antriebseinrichtung und die Pumpe sind seitlich an den Ventilblock angeflanscht; der topfförmige Vorratsbehälter ist auf die Pumpe aufgesetzt und umschließt diese allseitig. Diese Bauweise bedingt eine relativ lange axiale Ausdehnung des Kompaktaggregats, ferner lassen sich als Antriebseinrichtungen nur teuere Motoren mit eigenem Motorgehäuse einsetzen. Zur Reinigung des Vorratsbehälters muß dieser demontiert werden.

### Vorteile der Erfindung

Demgegenüber weist das erfindungsgemäße hydraulische Kompaktaggregat mit den kennzeichnenden Merkmalen des Anspruchs 1 den Vorteil auf, daß es axial besonders kurz baut und daß es die Verwendung preisgünstiger ungehäuster Motoren, d.h. Motoren ohne eigenes Motorgehäuse erlaubt. Dies wird mittels eines rahmenförmig ausgebildeten Hohlkörpers als Vorratsbehälter erreicht, der in seinem Innenbereich die Antriebseinrichtung aufnimmt. Der Vorratsbehälter umschließt die Antriebseinrichtung umfangseitig, und schützt diese damit vor äußeren Einflüssen.

Weitere Vorteile oder vorteilhafte Weiterbildungen der Erfindung ergeben sich aus den Unteransprüchen und der Beschreibung. Beispielsweise ergibt sich eine besonders bauraumsparende und fertigungstechnisch einfach beherrschbare Ausbildung des Vorratsbehälters, wenn dieser nach Anspruch 3 ringförmig ausgeführt ist. Die Stirnseite des Vorratsbehälters wird gemäß dem Anspruch 2 von einem leicht abnehmbaren Deckel verschlossen. Nach dem Entfernen des Deckels kann der Vorratsbehälter von außen gereinigt werden, ohne daß der Vorratsbehälter demontiert werden muß. Dies vereinfacht die Wartung des Kompaktaggregats. Dieses baut besonders leicht und kostengünstig, wenn gemäß Anspruch 8 ein ungehäuster Elektromotor als Antriebseinrichtung verwendet wird. Als Pumpenelemente lassen sich gemäß Anspruch 9 in Großserie gefertigte und daher preisgünstige Cartridge-Bauelemente verwenden, die beispielsweise aus Anti-Blockier-Schutz-Bremsanlagen von Kraftfahrzeugen bekannt sind und die sich insbesondere durch eine einfache Montage und ein wartungsarmes, zuverlässiges Betriebsverhalten auszeichnen.

### Zeichnung

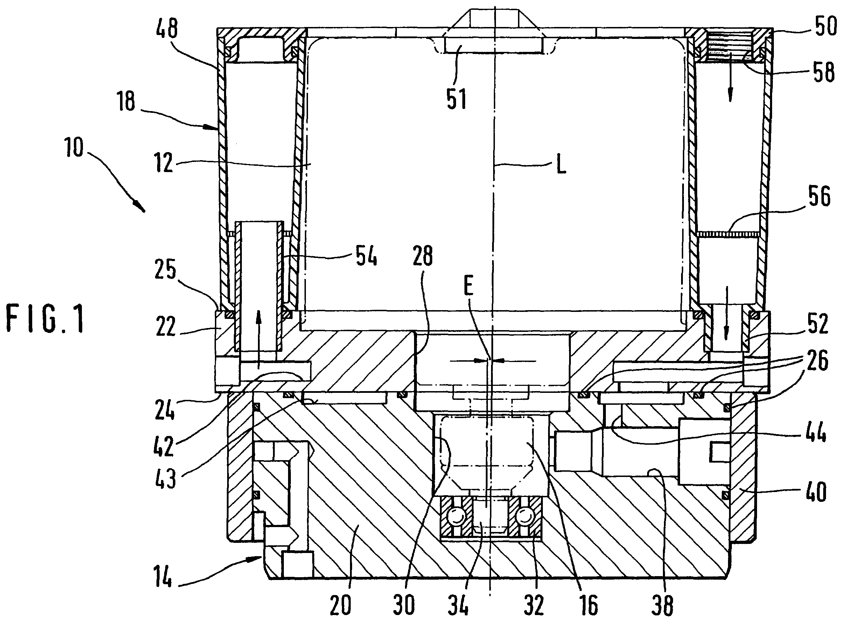

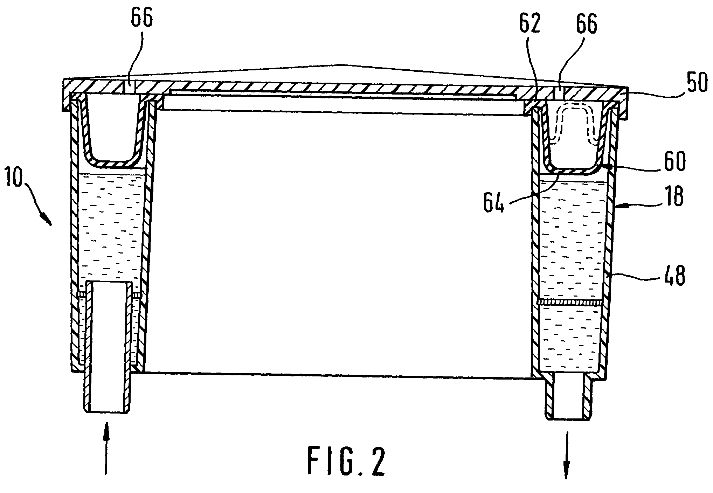

Ausführungsbeispiele der Erfindung sind in der Zeichnung dargestellt und in der nachfolgenden Beschreibung näher erläutert. Die Figuren 1 und 2 zeigen erfindungsgemäße hydraulische Kompaktaggregate im Längsschnitt.

### Beschreibung des Ausführungsbeispiels

Das in Figur 1 dargestellte hydraulische Kompaktaggregat 10 besteht im wesentlichen aus einer Antriebseinrichtung 12 in Form eines Elektromotors, einer Pumpe 14, deren explizit nicht dargestellte Pumpenelemente vom Elektromotor mittels eines Exzenters 16 angetrieben sind und einem Vorratsbehälter 18 zur Versorgung der Pumpe 14 mit Druckmittel. Als Druckmittel ist vorzugsweise Hydrauliköl vorgesehen.

Die Pumpe 14 weist ein zweigeteiltes Gehäuse aus einem blockförmigen Sockel 20 und einer zwischen diesem Sockel 20 und der Antriebseinrichtung 12 liegenden Flanschplatte 22 auf. Diese Flanschplatte 22 überragt in ihren Außenabmessungen sowohl die Antriebseinrichtung 12 als auch den Sockel 20, so daß sich am Übergang vom Sockel 20 zur Flanschplatte 22 bzw. von der Flanschplatte 22 zur Antriebseinrichtung 12 umlaufende Schultern 24, 25 ergeben. Zwischen dem Sockel 20 und der Flanschplatte 22 sind Dichtringe 26 zur Abdichtung des Pumpeninnenraums nach außen vorgesehen.

Die Flanschplatte 22 ist entlang der Längsachse L mit einer Durchgangsbohrung 28 versehen, die im Sockel 20 in eine mehrfach abgesetzte Sacklochbohrung 30 übergeht. In den Endbereich der Sacklochbohrung 30 ist ein Wälzlager 32 eingepreßt, das in seiner Lagerbohrung das freie Ende einer sich in die Sacklochbohrung 30 hinein erstreckenden Antriebswelle 34 der Antriebseinrichtung 12 aufnimmt. Auf der Antriebswelle 34 ist der Exzenter 16 drehfest angeordnet, wobei dieser gegenüber der Längsachse L die Exzentrizität E aufweist. Dieser Exzenter 16 wirkt mit nicht eingezeichneten Pumpenelementen zusammen, die in radial über den Umfang des Sockels 20 verteilt angeordneten und in die Sacklochbohrung 30 einmündenden Aufnahmebohrungen 38 eingebaut sind. Letztere sind zur Außenseite des Sockels 20 hin offen und werden dort von einem aufgeschobenen Ring 40 verschlossen, der mit seiner der Antriebseinrichtung 12 zugewandten Stirnseite an der Schulter 24 der Flanschplatte 22 anliegt. Zur Abdichtung der Aufnahmebohrungen 38 sind im Bereich des Rings 40 Dichtringe 26 vorhanden.

Ein auf der, der Flanschplatte 22 zugewandten Oberseite des Sockels 20 ausgebildeter Ringkanal 43 koppelt sämtliche Aufnahmebohrungen 38 hydraulisch miteinander und wirkt dadurch als gemeinsamer Zulauf für alle in diesen Aufnahmebohrungen 38 angeordneten Pumpenelemente. Druckmittelkanäle, die die Pumpenelemente mit den Verbrauchern verbinden und die Druckmittel unter Hochdruck führen sind in Figur 1 nicht erkennbar.

An der Außenseite der Flanschplatte 22 enden Radialkanäle 42 in Anschlüssen zur hydraulischen Kontaktierung des Kompaktaggregats 10 mit den Rückläufen der Verbraucher. Diese Radialkanäle 42 sind mit dem Vorratsbehälter 18 verbunden. Letzterer besteht aus einem rahmenförmigen, vorzugsweise ringförmigen Wandungsteil 48, das als Hohlkörper ausgebildet ist und das aus fertigungstechnischen Gründen konische Wandungen aufweist. Das Wandungsteil 48 stützt sich auf der vom Sockel 20 abgewandt liegenden Schulter 25 ab und ist topfförmig ausgebildet. In dem von ihm umschlossenen Innenbereich nimmt das Wandungsteil 48 die Antriebseinrichtung 12 auf.
Die vom Sockel 20 abgewandt liegende, stirnseitige Öffnung des Wandungsteils 48 ist von einem Deckel 50 verschlossen. Der Deckel 50 erstreckt sich im Ausführungsbeispiel über die gesamte Stirnfläche des Kompaktaggregats 10 und deckt somit auch die Stirnfläche der Antriebseinrichtung 12 ab. Der Deckel 50 ist vorzugsweise als Platte ausgeführt, in deren Zentrum eine der Antriebseinrichtung 12 zugewandte Erweiterung 51 vorhanden ist. Letztere greift zur Zentrierung in eine an der Antriebsvorrichtung 12 vorgesehene Ausformung ein.

Mit Ausnahme der dem Sockel 20 zugewandten Außenseite ist die Antriebseinrichtung 12 vom Vorratsbehälter 18 umschlossen und bedarf daher keines separaten Gehäuses. Ungehäuste Antriebseinrichtungen 12 sind kostengünstig, leicht und benötigen wenig Bauraum.

Aus der Bodenfläche des Wandungsteils 48 treten Stutzen 52 und 54 hervor, die in entsprechende Ausformungen der Flanschplatte 22 hinein ragen und die über dort vorhandene Kanäle mit den Radialkanälen 42 verbunden sind. Der Stutzen 52 ist einstückig an den Boden des Vorratsbehälters 18 angeformt, während der Stutzen 54 als einstückiger Fortsatz an einem Ansaugfilter 56 ausgebildet ist. Dieses Ansaugfilter 56 ist in den Vorratsbehälter 18 eingelegt und beispielsweise mit diesem verclipst. Der Stutzen 54 ragt durch eine abgedichtete Öffnung im Boden des Vorratsbehälters 18 in die entsprechende Ausformung der Flanschplatte 22 hinein und mündet dazu gegenüberliegend oberhalb des Ansaugfilters 56 in das Innere des Vorratsbehälters 18. Dadurch wird erreicht, daß das den Pumpenelementen über den Stutzen 52 zugeführte Druckmittel gefiltert ist, während das von den Verbrauchern zum Vorratsbehälter 18 zurückströmende Druckmittel zur Vermeidung eines Gegendrucks ungefiltert eingeleitet ist.

Zur Befüllung des Vorratsbehälters 18 mit Druckmittel und zum Ausgleich von Druckschwankungen ist im Deckel 50 wenigstens eine Öffnung 58 vorgesehen. In diese Öffnung 58 kann nach der Befüllung ein Luftfilter (nicht gezeichnet) eingesetzt sein, das im Falle einer Erschütterung des Kompaktaggregats 10 dem Austreten von Druckmittel und gleichfalls dem Eintreten von Schmutz aus der Umgebung entgegenwirkt. Allerdings sind derartige Luftfilter relativ teuer und können ein Entweichen von Gasen, verbunden mit einer in der Umgebung des Kompaktaggregats 10 wahrnehmbaren Geruchsbelästigung nicht vollständig vermeiden. Zur Lösung dieses Problems ist in Figur 2 eine dahingehend verbesserte Weiterbildung eines Kompaktaggregats 10 dargestellt.

Bei diesem Kompaktaggregat 10 ist zur Abtrennung des Innenraums des Vorratsbehälters 18 von der Umgebungsatmosphäre zwischen dem Wandungsteil 48 und dem Deckel 50 eine Membran 60 angeordnet. Diese ist aus einem gasdichten Elastomer, beispielsweise aus Gummi hergestellt und weist einen umlaufenden Dichtungsabschnitt 62 und einen den Querschnitt des Vorratsbehälters überspannenden Membranabschnitt 64 auf. Letzterer ragt im Ausführungsbeispiel abschnittsweise in das Innere des Vorratsbehälters 18 hinein. Aufgrund seiner Formflexibilität kann der Membranabschnitt 64 Druck- oder Volumenschwankungen im Vorratsbehälter 18 ausgleichen. Durch eine derartige Membran 60 kann auf ein separates Dichtelement zwischen Deckel 50 und Wandungsteil 48 verzichtet werden. Um einen die Verformung des Membranabschnitts 64 beeinflußenden Druckaufbau im Zwischenraum zwischen dem Deckel 50 und diesem Membranabschnitt 64 zu vermeiden sind Belüftungsöffnungen 66 im Deckel 50 vorgesehen.

Selbstverständlich sind weitergehende Änderungen oder Ergänzungen an den beschriebenen Ausführungsbeispielen möglich, ohne vom Grundgedanken der Erfindung abzuweichen. Diesbezüglich ist anzumerken, daß sich als Pumpenelemente insbesondere Bauelemente eigenen, die aus Anti-Blockier-Schutz-Bremsanlagen von Fahrzeugen hinlänglich bekannt sind. Derartige Pumpenelemente werden in Großserie produziert und sind daher preisgünstig am Markt erhältlich. Als Antriebseinrichtung 12 muß nicht zwangsweise ein Motor ohne eigenes Gehäuse eingesetzt werden. Vorzugsweise ist der Vorratsbehälter 18 aus Kunststoff in einem Spritzgießverfahren herstellbar. Dessen Verankerung am Kompaktaggregat 10 kann gemeinsam oder getrennt von der Antriebseinrichtung 12 erfolgen. Für eine gemeinsame Verankerung können beispielsweise Schraubanker verwendet werden, die die Antriebseinrichtung 12 durchdringen und deren Köpfe sich auf dem Deckelteil 50 abstützen.

## Patentansprüche

1. Hydraulisches Kompaktaggregat (10), insbesondere für Anwendungen in Fahrzeugen oder in mobilen Transport- oder Hebeeinrichtungen mit einem Druckerzeuger (14) der ein Druckmittel von einem Zulauf unter gleichzeitiger Druckerhöhung zu wenigstens einem Arbeitsanschluß fördert, einer den Druckerzeuger (14) antreibenden Antriebseinrichtung (12) und einem mit dem Zulauf hydraulisch verbundenen Vorratsbehälter (18) zur Speicherung des Druckmittels, dadurch gekennzeichnet, daß der Vorratsbehälter (18) als rahmenförmiger Hohlkörper ausgeführt ist, der die Antriebseinrichtung (12) wenigstens entlang ihres Außenumfangs umschließt.

2. Hydraulisches Kompaktaggregat nach Anspruch 1, dadurch gekennzeichnet, daß der Vorratsbehälter (18) ringfömig ausgeführt ist.

3. Hydraulisches Kompaktaggregat nach Anspruch 1 oder 2, dadurch gekennzeichnet, daß der Vorratsbehälter (18) aus einem im Querschnitt u-förmigen Wandungsteil (48) und einem die Öffnung dieses Wandungsteils (48) verschließenden Deckel (50) besteht.

4. Hydraulisches Kompaktaggregat nach Anspruch 3, dadurch gekennzeichnet, daß zwischen dem Wandungsteil (48) und dem Deckel (50) eine den Innenraum des Vorratsbehälters (18) zur Umgebung hin abtrennende Membran (60) aus gasdichtem Elastomer vorgesehen ist.

5. Hydraulisches Kompaktaggregat nach einem der Ansprüche 2 bis 4, dadurch gekennzeichnet, daß der Deckel (50) plattenförmig ausgeführt ist und die Stirnfläche des Kompaktaggregats (10) überdeckt.

6. Hydraulisches Kompaktaggregat nach einem der Ansprüche 1 bis 5, dadurch gekennzeichnet, daß der Vorratsbehälter (18) ein im Spritzgießverfahren herstellbares Kunststoffteil aus thermoplastischem Material ist und einteilig angeformte Stutzen (52) zur hydraulischen Kontaktierung mit dem Druckerzeuger (14) aufweist.

7. Hydraulisches Kompaktaggregat nach einem der Ansprüche 1 bis 6, dadurch gekennzeichnet, daß der Vorratsbehälters (18) ein Filterelement (56) mit einem angeformten Stutzen (54) aufnimmt.

8. Hydraulisches Kompaktaggregat nach einem der Ansprüche 1 bis 7, dadurch gekennzeichnet, daß die Antriebseinrichtung (12) ein Elektromotor ohne eigenes Motorgehäuse ist.
